# EUROPEAN PATENT SPECIFICATION

(11) **EP 4 435 705 B1**
(45) Date of publication and mention of the grant of the patent: **26.08.2026**
(21) Application number: 22895411.1
(22) Date of filing: 28.10.2022
(51) Int. Cl.: G06Q 50/10, G06Q 50/06, G01D 4/00

(54) **EMISSIONS ALLOWANCE MANAGEMENT SYSTEM AND EMISSIONS ALLOWANCE MANAGEMENT METHOD**
EMISSIONSBERECHTIGUNGSVERWALTUNGSSYSTEM UND EMISSIONSBERECHTIGUNGSVERWALTUNGSVERFAHREN
SYSTÈME ET PROCÉDÉ DE GESTION DE QUOTAS D'ÉMISSION

(30) Priority: 16.11.2021 JP 2021186561
(43) Date of publication of application: 25.09.2024
(73) Proprietor: Panasonic Intellectual Property Management Co., Ltd., Kadoma-shi, Osaka 571-0057 (JP)
(72) Inventor: Hiramatsu, Katsuhiko, Kadoma-shi, Osaka 571-0057 (JP)
(74) Representative: Appelt, Christian W.
(86) International application number: PCT/JP2022/040386
(87) International publication number: WO 2023/090128

(56) References cited:
- WO-A1-2010/067716
- WO-A1-2020/202587
- CN-A- 102 035 201
- CN-A- 111 476 487
- JP-A- 2007 159 298
- JP-A- 2015 529 869
- US-A1- 2006 161 450
- US-A1- 2009 062 970
- US-A1- 2012 233 045

## Description

### [Technical Field]

The present invention relates to an emission allowance management system and an emission allowance management method.

### [Background Art]

WO 2014/030373 A1 discloses an information system that supports continuation of daily energy saving actions.

CN 102035201 A discloses a power planning system and a power planning method. The power planning system comprises at least one electrical appliance, a socket, a power consumption detection device and a control device, wherein the power consumption detection device is arranged between the socket and the electrical appliance and is used for detecting the power consumption of the electrical appliance, the control device is used for obtaining the power consumption of the electrical appliance, detected by the power consumption detection device, and estimating the power consumption budget within a defined time period according to the power consumption of the electrical appliance.

CN 111476487 A discloses a self-adaptive energy management method, device and equipment based on blockchain.

### [Summary of Invention]

### [Technical Problem]

Incidentally, since greenhouse gases, such as carbon dioxide, cause global warming, business entities need to reduce the emission amount of greenhouse gases.
an emission allowance management system, an emission allowance management method and a program are defined in independent claims 1, 3 and 4, respectively.

### [Advantageous Effects of Invention]

An emission allowance management system and an emission allowance management method according to an aspect of the present invention can manage the emission amount of greenhouse gases resulting from the use of light sources for illumination.

### [Brief Description of Drawings]

[FIG. 1]

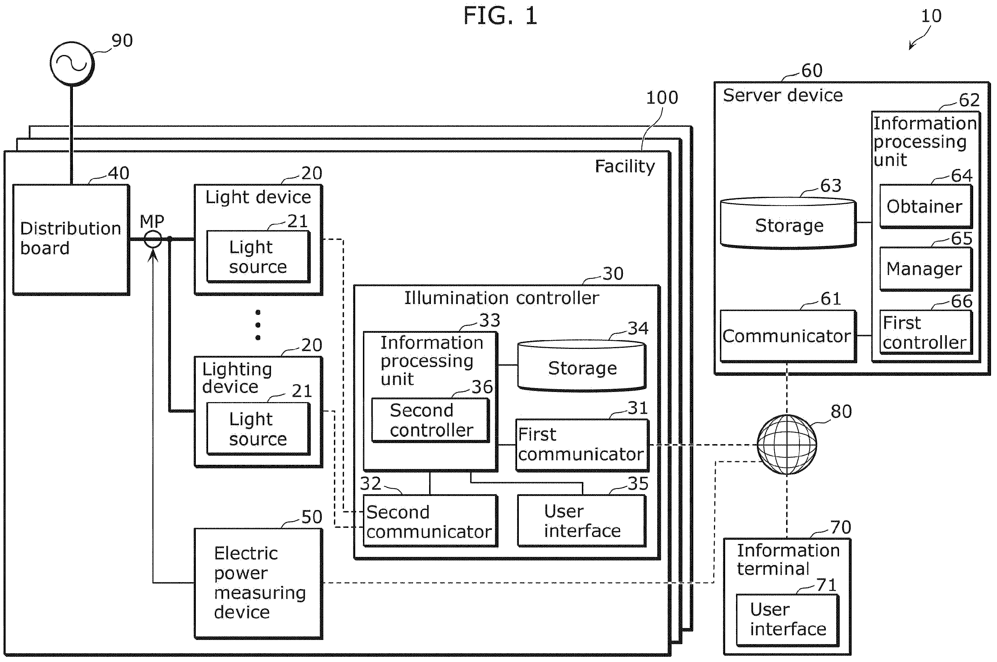

   FIG. 1 is a block diagram illustrating the functional configuration of an emission allowance management system according to an embodiment.
[FIG. 2]

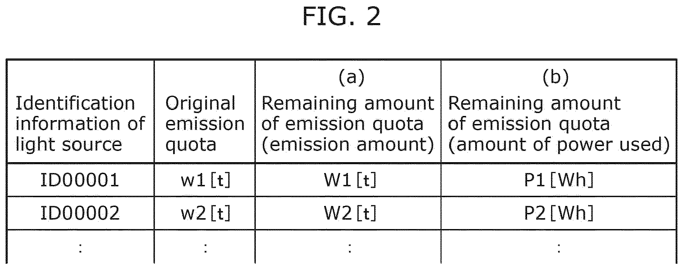

   FIG. 2 is a diagram illustrating an example of emission allowance management information.
[FIG. 3]

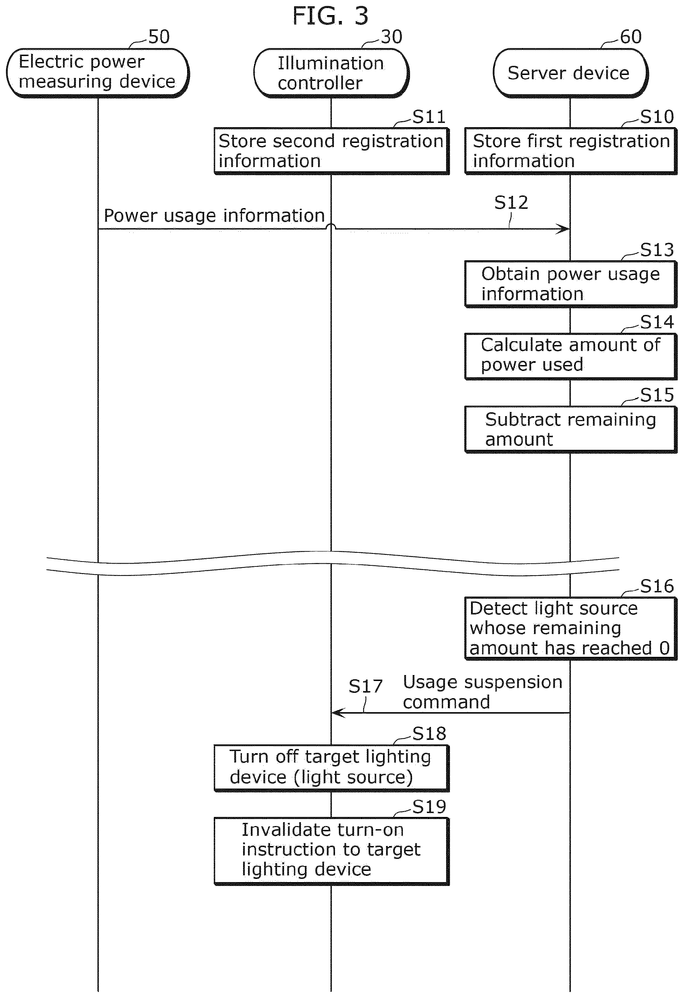

   FIG. 3 is a sequence diagram of Operation Example 1 of an emission allowance management system according to an embodiment.
[FIG. 4]

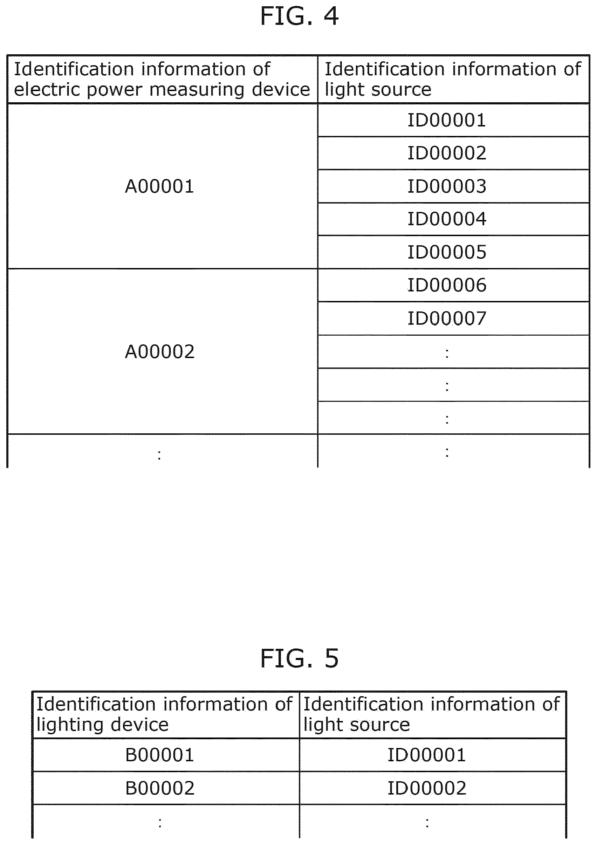

   FIG. 4 is a diagram illustrating an example of first registration information.
[FIG. 5]
   FIG. 5 is a diagram illustrating an example of second registration information.
[FIG. 6]

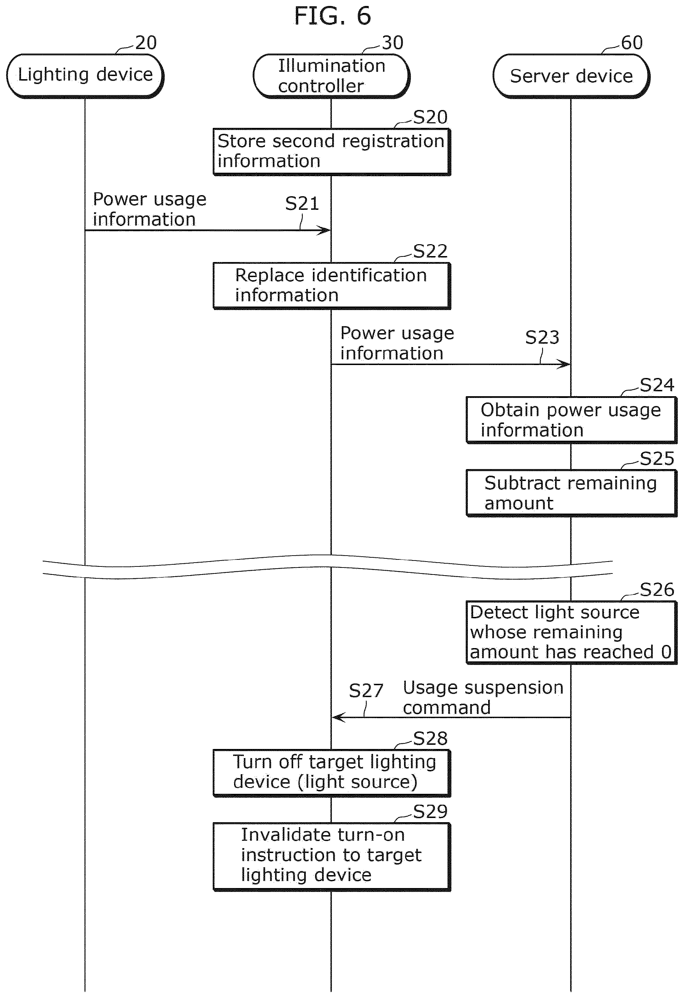

   FIG. 6 is a sequence diagram of Operation Example 2 of an emission allowance management system according to an embodiment.
[FIG. 7]

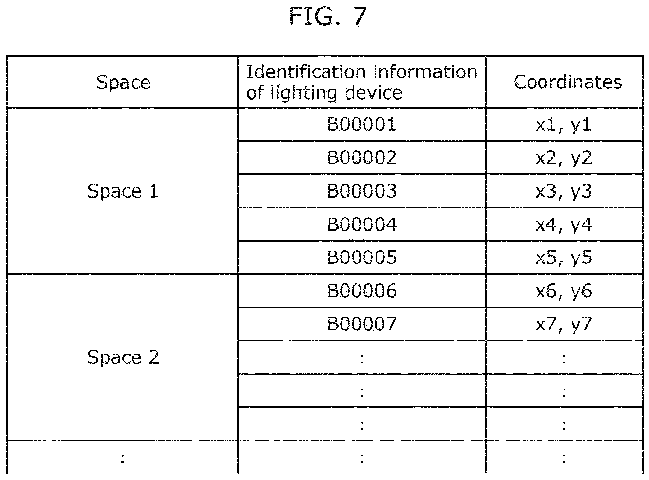

   FIG. 7 is a diagram illustrating an example of arrangement information.
[FIG. 8]

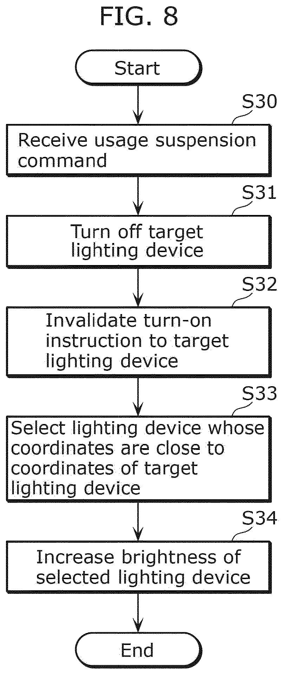

   FIG. 8 is a flowchart of Operation Example 3 of an emission allowance management system according to an embodiment.
[FIG. 9]

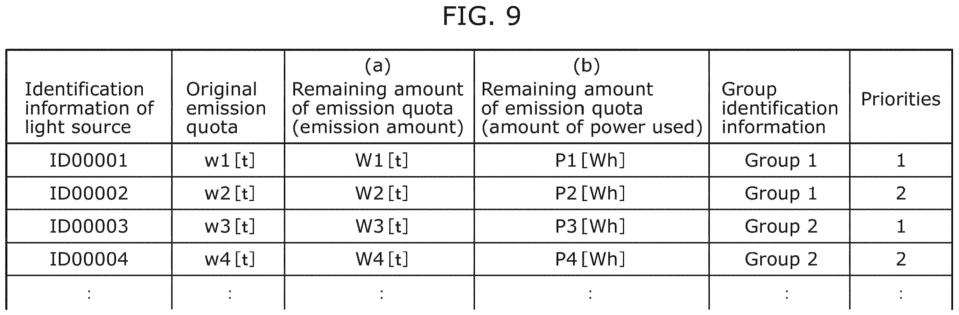

   FIG. 9 is a diagram illustrating an example of emission allowance management information including group identification information.
[FIG. 10]

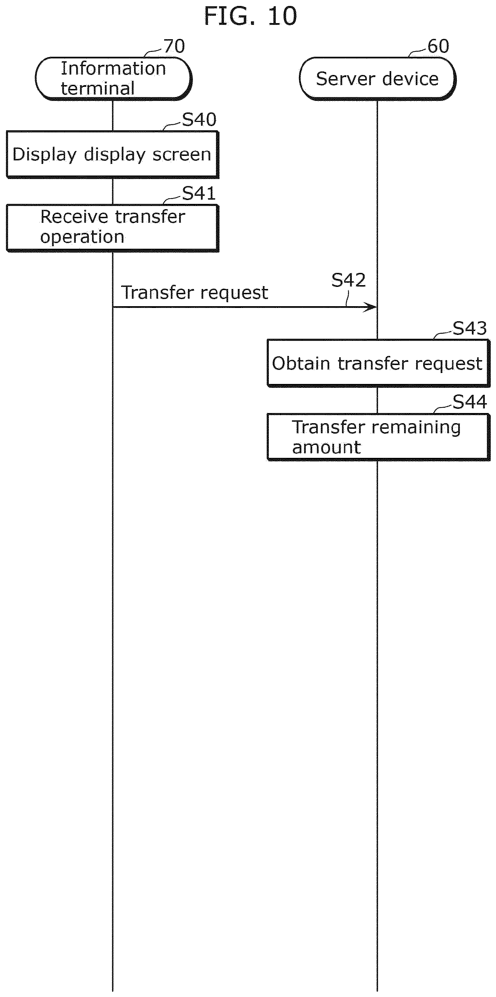

   FIG. 10 is a sequence diagram of Operation Example 4 of an emission allowance management system according to an embodiment.
[FIG. 11]

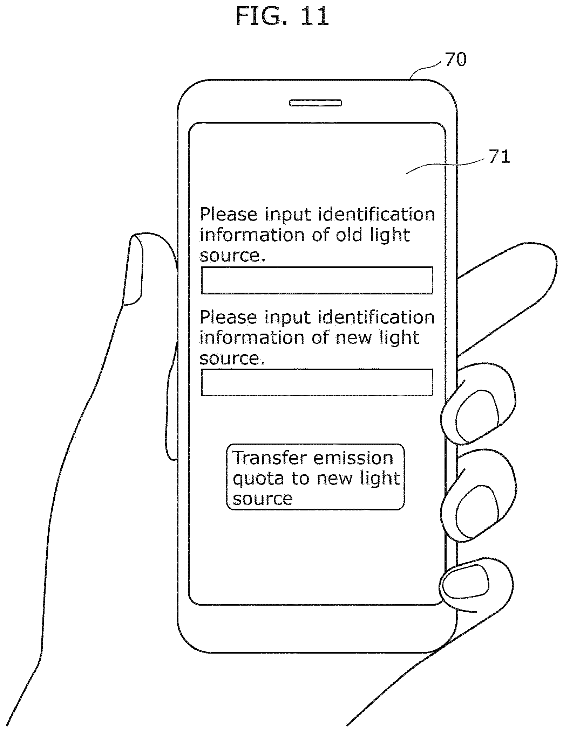

   FIG. 11 is a diagram illustrating an example of a display screen for receiving a transfer operation of an emission quota.

### [Description of Embodiments]

Hereinafter, a certain exemplary embodiment will be described in detail with reference to the accompanying Drawings. The following embodiment is a general or specific example of the present invention. The numerical values, shapes, materials, constituent elements, arrangement and connection configuration of the constituent elements, steps, the order of the steps, etc., described in the following embodiment are merely examples, and are not intended to limit the present invention. Among constituent elements in the following embodiment, those not described in any one of the independent claims indicating the broadest concept of the present disclosure are described as optional constituent elements.

Note that the respective figures are schematic diagrams and are not necessarily precise illustrations. Additionally, components that are essentially the same share like reference signs in the figures. Accordingly, overlapping explanations thereof are omitted or simplified.

### (Embodiment)

### [Underlying Knowledge Forming Basis of the Present Invention]

Greenhouse gases, such as carbon dioxide, cause global warming. A framework for allocating emission quotas of carbon dioxide to business entities has been proposed as a measure for reducing the emission amount of carbon dioxide. Under such a framework, the business entities need to perform business activities so that the emission amounts of carbon dioxide produced by the business activities do not exceed the emission quotas.

The business entities need to suppress the supply chain emission amount, which is the total of not only the emission amount of greenhouse gases by the business entities themselves, but also the emission amount of all greenhouse gases related to the business activities.

Here, the supply chain emission amount is composed of three categories, i.e., Scope1 to Scope3. Scope1 corresponds to the direct emission amount of greenhouse gases by a business entity itself, and more specifically corresponds to the emission amount produced by combustion of fuels, industrial processes, and the like. Scope2 corresponds to the direct emission amount of greenhouse gases associated with the use of electricity, heat, steam, and the like supplied by other business entities.

Scope3 corresponds to the indirect emission amount of greenhouse gases other than Scope1 and Scope2. Although Scope3 is further divided into category 1 to category 15, there is room for considering a method of reducing the emission amount of greenhouse gases resulting from the use of sold products, which corresponds to category 11. In the following embodiment, a description will be given of an emission allowance management system that can manage the emission amount of carbon dioxide resulting from the use of sold products (light sources).

### [Configuration]

First, the configuration of an emission allowance management system according to an embodiment will be described. FIG. 1 is a block diagram illustrating the functional configuration of the emission allowance management system according to the embodiment.

Emission allowance management system 10 illustrated in FIG. 1 is a system that manages the emission amount of carbon dioxide resulting from the use of light sources 21 provided in each of a plurality of facilities 100. Here, each light source 21 is a light source for illumination that has an attaching structure such as a cap and that is detachably attached to a device body of lighting device 20, and is specifically a LED (Light Emitting Diode) light bulb, a straight LED lamp, or the like.

Although facility 100 is, for example, a residence (an individual house or an apartment complex), facility 100 may be an office building, a factory, a commercial establishment, an accommodation, or a public facility. Each of facilities 100 is provided with a plurality of lighting devices 20, illumination controller 30, distribution board 40, and electric power measuring device 50. Emission allowance management system 10 includes a plurality of lighting devices 20, illumination controller 30, distribution board 40, and electric power measuring device 50.

Additionally, server device 60 and information terminal 70 are located outside of facility 100. Emission allowance management system 10 includes server device 60 and information terminal 70. Note that information terminal 70 may be located in facility 100. Hereinafter, each device provided in emission allowance management system 10 as described above will be described in detail.

Lighting devices 20 are provided in facility 100, and illuminate the inside (indoor) of facility 100 by emitting light (for example, white light). Lighting devices 20 may be lighting devices that are provided outdoor in vicinity of facility 100, and that illuminate the outdoor by emitting light (for example, white light). More specifically, lighting device 20 includes a device body (not illustrated) and light source 21.

Light source 21 is light source device for illumination that is detachably attached to the device body. As described above, specifically, light source 21 is a LED light bulb, a straight LED lamp, and the like. It is not essential that light source 21 is realized by a LED element, and light source 21 may be realized by other light emitting elements, such as an organic EL (Electro-Luminescence).

Note that, in the example of FIG. 1, although one light source 21 is attached to one lighting device 20, a plurality of light sources 21 may be attached to one lighting device 20.

Illumination controller 30 is provided in facility 100, and controls lighting devices 20 provided in the same facility 100. Specifically, although illumination controller 30 controls turning on and off of lighting devices 20, illumination controller 30 may further control dimming and color adjustment. Illumination controller 30 may be an exclusive controller for lighting devices 20, or may be an EMS (Energy Management System) controller or the like. Illumination controller 30 may be a controller fixed to a wall or a ceiling, or may be a portable controller. Illumination controller 30 includes first communicator 31, second communicator 32, information processing unit 33, storage 34, and user interface 35.

First communicator 31 is a communication circuit for illumination controller 30 to communicate with server device 60 and the like via wide area communication network 80. Although first communicator 31 is, for example, a wireless communication circuit that performs wireless communication, first communicator 31 may be a wired communication circuit that performs wired communication. The communication standard for communication performed by first communicator 31 is not particularly limited.

Second communicator 32 is a communication circuit for illumination controller 30 to communicate with lighting devices 20 and the like via a local communication network. Although second communicator 32 is, for example, a wireless communication circuit that performs wireless communication, second communicator 32 may be a wired communications circuit that performs wired communication. The communication standard for communication performed by second communicator 32 is not particularly limited.

Information processing unit 33 performs information processing related to control of lighting devices 20. Although information processing unit 33 is realized by, for example, a microcomputer, information processing unit 33 may be realized by a processor. Information processing unit 33 includes, as a functional component, second controller 36 that transmits a control signal to lighting devices 20 via second communicator 32 based on an operation by a user that is received by user interface 35. The function of second controller 36 is realized by, for example, executing a computer program stored in storage 34 by a microcomputer, a processor, or the like that constitutes information processing unit 33.

Storage 34 is a storage device that stores a computer program and the like that are executed by information processing unit 33. Storage 34 is realized by, for example, a semiconductor memory.

User interface 35 receives an operation by the user, and presents information to the user. User interface 35 is realized by a touch panel or hardware key (push button) that receives an operation by the user, and a display panel, such as a liquid crystal panel or an organic EL panel.

Distribution board 40 distributes alternating current power supplied from system power supply 90 to a plurality of branch circuits. Each of the plurality of branch circuits is connected to an instrument, such as lighting device 20.

Electric power measuring device 50 measures the amount of power used (in other words, the power consumption amount) at predetermined measuring point MP. Electric power measuring device 50 uses, for example, a current sensor (CT: Current Transformer) attached to an electric wire corresponding to a branch circuit to which a plurality of lighting devices 20 are connected to measure the amount of power used in the branch circuit (electric wire). Additionally, electric power measuring device 50 transmits a measured value of the amount of power used to server device 60 through wide area communication network 80.

Note that a measuring function of the amount of power used similar to the measuring function of electric power measuring device 50 may be included in distribution board 40, or may be included in illumination controller 30. When the measuring function (measuring unit) of the amount of power used is included in distribution board 40 or illumination controller 30, electric power measuring device 50 may be omitted. Additionally, also when lighting device 20 has a function of measuring the amount of power used by lighting device 20 itself (light source 21) as will be described later, electric power measuring device 50 may be omitted.

Server device 60 is a cloud server that performs information processing on management of the emission amount of carbon dioxide resulting from the use of light sources 21. Server device 60 is used by, for example, a business entity that performs manufacturing and sales of light sources 21. Specifically, server device 60 includes communicator 61, information processing unit 62, and storage 63.

Communicator 61 is a communication circuit for server device 60 to communicate with illumination controller 30, information terminal 70, and the like through wide area communication network 80. Although communicator 61 is, for example, a wired communicator that performs wired communication, communicator 61 may be a wireless communication circuit that performs wireless communication. The communication standard for communication performed by communicator 61 is not particularly limited.

Information processing unit 62 performs information processing on management of the emission amount of carbon dioxide resulting from the use of light sources 21. Specifically, information processing unit 62 is realized by a microcomputer or a processor. Information processing unit 62 has, as functional components, obtainer 64, manager 65, and first controller 66. The functions of obtainer 64, manager 65, and first controller 66 are realized by, for example, executing a computer program stored in storage 63 by a microcomputer or a processor constituting information processing unit 62. The details of the functions of obtainer 64, manager 65, and first controller 66 will be described later.

Storage 63 is a storage device that stores various kinds of information, the above-described computer program, and the like required for the above-described information processing. Although storage 63 is realized by, for example, a HDD (Hard Disk Drive), storage 63 may be realized by a semiconductor memory.

As described above, emission allowance management system 10 can manage the emission amount of carbon dioxide resulting from the use of light sources 21, and emission allowance management information is stored in advance in storage 63. FIG. 2 is a diagram illustrating an example of the emission allowance management information.

As illustrated in FIG. 2, in the emission allowance management information, the identification information of light source 21 is associated with the original emission quota of carbon dioxide allocated to that light source 21, and with the remaining amount of the emission quota of carbon dioxide allocated to that light source 21. In the example of FIG. 2, the remaining amount of the emission quota is represented by the emission amount [t] of carbon dioxide ((a) of FIG. 2), and is also represented by the amount of power used [Wh] ((b) of FIG. 2). Note that the emission amount of carbon dioxide can be converted to the amount of power used by a predetermined calculation formula.

At a time before light source 21 is sold, the remaining amount of the emission quota of carbon dioxide of light source 21 in the emission allowance management information is equal to the original emission quota. In emission allowance management system 10, when the user purchases light source 21, and uses the purchased light source 21 (causes light source 21 to emit light), the remaining amount of the emission quota is decreased, and when the remaining amount of the emission quota reaches 0, light source 21 cannot be used. Note that the user will purchase light source 21 for which the price is set so as to include the cost corresponding to the emission quota of carbon dioxide.

Although in the following embodiment, unless otherwise specified, a description will be given of an example in which the emission amount of carbon dioxide of light source 21 is managed by using the remaining amount of the emission quota of carbon dioxide in terms of the amount of power used illustrated in the column (b) of FIG. 2, the emission amount of carbon dioxide of light source 21 may be managed by using the remaining amount of the emission quota corresponding to the emission amount of carbon dioxide illustrated in the column (a) of FIG. 2. The emission allowance management information may include at least one of the column (a) of FIG. 2 and the column (b) of FIG. 2.

Information terminal 70 is an information terminal that is used by the user for registration of information to server device 60 and the like. Information terminal 70 is, for example, a portable information terminal such as a smart phone or a tablet terminal. Information terminal 70 may be a stationary information terminal such as a personal computer. Information terminal 70 includes user interface 71.

User interface 71 receives an operation by the user, and presents information to the user. User interface 71 is realized by a touch panel or hardware key (push button) that receives an operation by the user, and a display panel, such as a liquid crystal panel or an organic EL panel. When information terminal 70 is a personal computer, a mouse and a keyboard are included in user interface 71.

### [Operation Example 1]

As described above, emission allowance management system 10 can manage the emission amount of carbon dioxide resulting from the use of light sources 21. Hereinafter, Operation Example 1 of emission allowance management system 10 as described above will be described. FIG. 3 is a sequence diagram of Operation Example 1 of emission allowance management system 10.

First, when the user purchases light source 21, the user registers, with server device 60, the identification information of light source 21 in association with the identification information of electric power measuring device 50 that measures the amount of power used (the power consumption amount) of that light source 21. As a result, first registration information is stored in storage 63 (S10). FIG. 4 is a diagram illustrating an example of the first registration information.

Registration of the identification information in step S10 is performed by, for example, inputting the identification information of light source 21 and the identification information of electric power measuring device 50 to information terminal 70 by a manual operation by the user to user interface 71 of information terminal 70, and the like. Note that the identification information of light source 21 is displayed on the body of light source 21, a wrapping package, an operation manual, or the like. The same applies to the identification information of electric power measuring device 50.

Each of the identification information of light source 21 and the identification information of electric power measuring device 50 may be displayed by a two-dimensional code, such as a QR Code (registered trademark). In a case where information terminal 70 includes a camera, when the two-dimensional code indicating the identification information of light source 21 is displayed on the body of light source 21, the wrapping package, the operation manual, or the like, the user can easily input the identification information of light source 21 to information terminal 70 by photographing the two-dimensional code by using information terminal 70. Similarly, when the two-dimensional code indicating the identification information of electric power measuring device 50 is displayed on the body of electric power measuring device 50, a wrapping package, an operation manual, or the like, the user can easily input the identification information of electric power measuring device 50 to information terminal 70 by photographing the two-dimensional code by using information terminal 70.

Additionally, the user registers, with illumination controller 30, the identification information of light source 21 in association with the identification information of lighting device 20 (device body) to which that light source 21 is attached. As a result, second registration information is stored in storage 34 (S11). FIG. 5 is a diagram illustrating an example of the second registration information. Note that the identification information of lighting device 20 is displayed on the body of lighting device 20, a wrapping package, an operation manual, or the like.

Registration of the identification information is performed by, for example, inputting the identification information of light source 21 and the identification information of lighting device 20 to illumination controller 30 by a manual operation by the user to user interface 35 of illumination controller 30, and the like.

Next, electric power measuring device 50 measures the amount of power used at predetermined measuring point MP
(illustrated in FIG. 1), and transmits power usage information, which indicates the measured amount of power used, to server device 60 (S12). The identification information of electric power measuring device 50 is included in the power usage information. The identification information of electric power measuring device 50 is an example of specification information, and is used for specifying the identification information of target light source 21 in the next step S13.

Communicator 61 of server device 60 receives power usage information, and obtainer 64 obtains the power usage information received by communicator 61 (S13). Manager 65 calculates the amount of power used per light source 21, based on the obtained power usage information and the first registration information (S14). First, manager 65 extracts the identification information of electric power measuring device 50 from the power usage information obtained in step S13, and specifies, in the first registration information, the total number of items of the identification information of light source 21 (hereinafter also described as target light source 21) associated with the identification information of extracted electric power measuring device 50.

Manager 65 can calculate the amount of power used per target light source 21 by dividing the amount of power used indicated by the power usage information by the total number of items of the identification information of target light source 21. For example, when the amount of power used obtained in step S13 indicates that the total amount of the amount of power used by five light sources 21 ID00001 to ID00005 is P, manager 65 can calculate that the amount of power used of each of five light sources 21 ID00001 to ID00005 is P/5.

Next, manager 65 subtracts the calculated amount of power used from the remaining amount of the emission quota of carbon dioxide in the emission allowance management information (S15).
For example, manager 65 subtracts P/5 from the remaining amount of the emission quota (the amount of power used) of each of five light sources 21 ID00001 to ID00005 in the emission allowance management information.

The processing from step S12 to step S15 is repeated at predetermined time intervals. The predetermined time interval is, for example, one hour, but is not particularly limited.

After the processing from step S12 to step S15 is repeated several times, manager 65 detects light source 21 whose remaining amount of the emission quota of carbon dioxide has reached 0, based on the emission allowance management information (S16). First controller 66 uses communicator 61 to transmit, to illumination controller 30, a usage suspension command for making light source 21 whose detected remaining amount is 0 unusable (S17). The usage suspension command includes the identification information of the detected light source 21.

First communicator 31 of illumination controller 30 receives the usage suspension command. Based on the received usage suspension command, second controller 36 determines whether or not the identification information of light source 21 that is a target of usage suspension is included in the second registration information. When second controller 36 determines that the identification information of light source 21 that is the target of usage suspension is included in the second registration information, second controller 36 turns off lighting device 20 (hereinafter also described as target lighting device 20) to which that light source 21 is attached (S18). Specifically, second controller 36 uses second communicator 32 to transmit, to target lighting device 20, a control signal for turning off target lighting device 20.

Additionally, second controller 36 invalidates a turn-on instruction to target lighting device 20 (S19). Specifically, even if the user performs an operation to instruct turning on of target lighting device 20 on user interface 35, second controller 36 does not transmit, to target lighting device 20, a control signal for turning on target lighting device 20.

In this manner, according to emission allowance management system 10, although light source 21 can be used until the remaining amount of the emission quota becomes 0, when the remaining amount of the emission quota becomes 0, light source 21 cannot be used even though there is no hardware problem (no malfunction). In other words, according to emission allowance management system 10, although light source 21 can be turned on until the remaining amount of the emission quota becomes 0, when the remaining amount of the emission quota becomes 0, light source 21 cannot be turned on. According to emission allowance management system 10, a business entity that manufactures and sells light sources 21 can manage the emission amount of carbon dioxide resulting from the use of light sources 21.

### [Operation Example 2]

In Operation Example 1, although the amount of power used of light source 21 is measured by electric power measuring device 50, it may be measured by lighting device 20. Hereinafter, Operation Example 2 of emission allowance management system 10 as described above will be described. FIG. 6 is a sequence diagram of Operation Example 2 of emission allowance management system 10.

First, when the user purchases light source 21, the user registers, with illumination controller 30, the identification information of light source 21 in association with the identification information of lighting device 20 (device body) to which that light source 21 is attached. As a result, the second registration information (refer to FIG. 5) is stored in storage 34 (S20). Since the processing in step S20 is the same as that in step S11 of Operation Example 1, a detailed description is omitted.

Next, lighting device 20 measures the amount of power used of lighting device 20, and transmits, to illumination controller 30, the power usage information, which indicates the measured amount of power used (S21). For example, DALI (registered trademark), which is the international standard of illumination control, defines the measuring method of the amount of power used in lighting device 20 (refer to DiiA Specification, DALI Part 252 - Energy Reporting), and lighting device 20 can measure the amount of power used according to, for example, such a standard. The identification information of lighting device 20 is included in the power usage information.

Second communicator 32 of illumination controller 30 receives the power usage information. Information processing unit 33 replaces the identification information of lighting device 20 included in the power usage information with the identification information of light source 21 based on the second registration information (S22), and transmits the identification information of light source 21 to server device 60 by using first communicator 31 (S23). It can be said the power usage information transmitted to server device 60 in step S23 is the information that indicates the amount of power used of light source 21, and that includes the identification information of light source 21 as the specification information. Note that, when a plurality of light sources 21 are attached to one lighting device 20, the power usage information transmitted to server device 60 in step S23 includes the identification information of a plurality of light sources 21.

Communicator 61 of server device 60 receives the power usage information, and obtainer 64 obtains the power usage information received by communicator 61 (S24). Manager 65 subtracts the amount of power used indicated by the power usage information obtained in step S23 from the remaining amount of the emission quota of carbon dioxide associated with the identification information included in the power usage information obtained in step S24 in the emission allowance management information (S25). For example, when the amount of power used indicated by power usage information is P, and the identification information of ID00001 is included in the power usage information, manager 65 subtracts P/5 from the remaining amount of the emission quota (the amount of power used) of light source 21 of ID00001 in the emission allowance management information.

Note that, when the identification information of a plurality of light sources 21 is included in the power usage information obtained in step S24 (that is, when a plurality of light sources 21 are attached to one lighting device 20), processing of calculating the amount of power used per light source is performed in step S25. For example, when the amount of power used indicated by the power usage information is P, and two items of identification information, i.e., ID00001 and ID00002, are included in the power usage information, manager 65 subtracts P/2 from the remaining amount of the emission quota (the amount of power used) of each of two light sources 21 ID00001 and ID00002 in the emission allowance management information.

The processing from step S21 to step S25 is repeated at predetermined time intervals. The predetermined time interval is, for example, one hour, but is not particularly limited.

After the processing from step S21 to step S25 is repeated several times, manager 65 detects light source 21 whose remaining amount of the emission quota of carbon dioxide has reached 0, based on the emission allowance management information (S26). Since the subsequent processing from step S26 to step S29 is the same as that from step S16 to step S19 of Operation Example 1, a detailed description is omitted.

In this manner, according to emission allowance management system 10, although light source 21 can be used (can be turned on) until the remaining amount of the emission quota becomes 0, when the remaining amount of the emission quota becomes 0, light source 21 cannot be used (cannot be turned on) even though there is no hardware problem (no malfunction). In this manner, emission allowance management system 10 can manage the emission amount of carbon dioxide resulting from the use of light sources 21.

### [Modification of Operation Example 2]

Note that, in Operation Example 2, although the replacement processing of the identification information (the processing in step S22) is performed in illumination controller 30, it may be performed in server device 60. For example, when the second registration information is stored in advance in storage 63 of server device 60, instead of illumination controller 30, manager 65 of server device 60 can perform the replacement processing of the identification information. In this case, the identification information of lighting device 20 included in the power usage information transmitted by lighting device 20 functions as the specification information for specifying light source 21.

Additionally, in this case, since the power usage information transmitted by lighting device 20 need not go through illumination controller 30, lighting device 20 may be connected to wide area communication network 80 without going through illumination controller 30, and may transmit the power usage information to server device 60.

Additionally, when lighting device 20 can directly obtain the identification information of light source 21 attached to that lighting device 20, lighting device 20 can transmit the power usage information including the identification information of light source 21. For example, when light source 21 is provided with a RFID tag in which the identification information of light source 21 is recorded, and lighting device 20 includes a reader of the RFID tag, lighting device 20 can obtain the identification information of light source 21 from the RFID tag when light source 21 is attached to lighting device 20.

In this case, the replacement processing of the identification information becomes unnecessary in both illumination controller 30 and server device 60, and advanced registration of the second registration information also becomes unnecessary.

### [Operation Example 3: Operation for supplementing brightness in space]

Incidentally, there is a case where the required illuminance is defined in a space in facility 100, for example, in an office, the illuminance at hand is required to be 500 lux or more, and the illuminance at feet is required to be 300 lux or more. As in Operation Example 1 and Operation Example 2, when the use of light source 21 whose remaining amount of the emission quota is used up is stopped, the illuminance in the space illuminated by that light source 21 may become insufficient.

Therefore, when the use of light source 21 is stopped, emission allowance management system 10 may perform an operation of supplementing the brightness in the space. In order to perform the operation of supplementing the brightness in the space, in addition to the above-described second registration information, the arrangement information indicating the arrangement of a plurality of lighting devices 20 is stored in storage 34 of illumination controller 30. FIG. 7 is a diagram illustrating an example of the arrangement information.

As illustrated in FIG. 7, in the arrangement information, the identification information of lighting device 20, the space where lighting device 20 is arranged, and the two-dimensional coordinates of lighting device 20 are associated with each other. The space here means, for example, a closed space, and when facility 100 is a residence, each of chambers, such as a living room, a bedroom, and a bathroom, corresponds to the space. The arrangement information is stored in storage 34 of illumination controller 30 by a manual operation to user interface 35 at the time of, for example, the construction of a plurality of lighting devices 20 (device bodies) and illumination controller 30. Since the identification information of lighting device 20 in the arrangement information can be replaced with the identification information of light source 21 based on the second registration information, it can be said that the arrangement information is information indicating the arrangement of a plurality of light sources 21.

Hereinafter, the operation (Operation Example 3) of supplementing the brightness in the space by using such arrangement information will be described. FIG. 8 is a flowchart of Operation Example 3 of emission allowance management system 10.

As described in Operation Example 1 or Operation Example 2, first communicator 31 of illumination controller 30 receives a usage suspension command from server device 60 (S30), and second controller 36 causes target lighting device 20 to be turned off based on the received usage suspension command (S31). Additionally, second controller 36 invalidates a turn-on instruction to target lighting device 20 (S32).

Next, based on the arrangement information stored in storage 34, second controller 36 sequentially selects n (n is a natural number) lighting devices 20 from lighting devices 20 that are arranged in the same space as target lighting device 20, and that have coordinates (a distance) close to the coordinates of target lighting device 20 (S33). n is empirically or experimentally defined in advance by a designer or the like of emission allowance management system 10. In the selection of lighting device 20 in step S33, lighting device 20 in the state where turning on is disabled based on the usage suspension command is excluded. Additionally, in the selection of lighting device 20 in step S33, the requirement of belonging to the same space is not essential, and more simply, n lighting devices 20 may be sequentially selected from lighting devices that have coordinates close to the coordinates of target lighting device 20.

Next, second controller 36 increases the brightness during turning on of selected n lighting devices 20 before target lighting device 20 becomes unusable (S34). In other words, when target light source 21 attached to target lighting device 20 is controlled to be unusable based on the arrangement information indicating the arrangement of a plurality of light sources 21, second controller 36 increases the brightness of the other light sources 21 located in vicinity of target light source 21. Specifically, second controller 36 can increase the brightness of selected n lighting devices 20 by transmitting a control signal to selected n lighting devices 20 by using second communicator 32. The degree to which the brightness is increased can be empirically or experimentally determined in advance by a designer or the like of emission allowance management system 10.

As described above, when the use of light source 21 is stopped, emission allowance management system 10 can perform the operation of supplementing the brightness in the space.

### [Grouping of light sources]

The emission allowance management information may include group identification information indicating a group to which each of a plurality of light sources 21 belongs. FIG. 9 is a diagram illustrating an example of the emission allowance management information including the group identification information. The group identification information is assigned to the emission allowance management information by, for example, a manual operation by the user to user interface 71 of information terminal 70. For example, the user assigns the group identification information so that light sources 21 located in the same space belong to the same group.

In this manner, when the emission allowance management information includes the group identification information, first controller 66 controls light sources 21 belonging to the same group to be unusable, based on the total of the remaining amount of the emission quota of the light sources belonging to the same group.

For example, according to the emission allowance management information in FIG. 9, light source 21 of ID00001 and light source 21 of ID00002 belong to the same group. When the remaining amount of the emission quota of light source 21 of ID00001 is used up, and the remaining amount of light source 21 of ID00002 remains, first controller 66 does not perform control to make light source 21 of ID00001 unusable. That is, the user can use two light sources 21 until the total P1+P2 of the remaining amounts of the emission quotas of two light sources 21 reaches 0. As described above, when the group identification information is assigned such that light sources 21 located in the same space belong to the same group, it becomes less likely that only a part of light sources 21 located in the same space become unusable.

Incidentally, when the total P1+P2 of the remaining amounts of the emission quotas of two light sources 21 approaches 0, a situation may occur in which only one light source 21 can be used, but two light sources 21 cannot be used due to the remaining amount of the emission quota. For example, in a case where manager 65 (or first controller 66) determines whether to stop light source 21 by using one hour as the minimum unit, as a result of the determination, a situation may occur in which, in the next one hour, only one light source 21 can be used, but two light sources 21 cannot be used.

Therefore, as illustrated in FIG. 8, light sources 21 belonging to the same group may be assigned priorities. The priorities are assigned to the emission allowance management information by, for example, a manual operation by the user to user interface 71 of information terminal 70.

When the total of the remaining amounts of the emission quotas of light sources 21 belonging to the same group approaches 0, first controller 66 controls light sources 21 belonging to the same group to be unusable in an order based on the priorities. Specifically, first controller 66 sequentially controls light sources 21 belonging to the same group to be unusable, starting from light source 21 with the lowest priority.

In this manner, emission allowance management system 10 can also manage the remaining amount of the emission quota on a group basis.

### [Operation Example 4: Transfer operation of emission quota]

When the user buys new light source 21 to replace old purchased light source 21, there is room for considering how to handle the remaining amount of the emission quota of old light source 21. Emission allowance management system 10 may perform, for example, an operation of transferring the remaining amount of the emission quota of existing light source 21 to new light source 21. Hereinafter, such a transfer operation (Operation Example 4) of the remaining amount of emission quota will be described. FIG. 10 is a sequence diagram of Operation Example 4 of emission allowance management system 10.

When the user causes information terminal 70 to execute a browser or a predetermined application program, a display screen as illustrated in FIG. 11 is displayed on user interface 71 (S40). FIG. 11 is a diagram illustrating an example of the display screen for receiving a transfer operation of the emission quota.

When the display screen in FIG. 11 is displayed, the user performs a transfer operation to instruct the transfer of the remaining amount of the emission quota. User interface 71 of information terminal 70 receives such a transfer operation (S41). The transfer operation includes an input operation of the identification information of old light source 21 (an example of first light source), an input operation of the identification information of new light source 21 (an example of second light source), and the like.

When the transfer operation is received by user interface 71, information terminal 70 transmits a transfer request to server device 60 (S42). The transfer request includes the identification information of old light source 21 and the identification information of new light source 21.

Communicator 61 of server device 60 receives the transfer request. Obtainer 64 obtains the transfer request (S43). Manager 65 transfers the remaining amount of the emission quota based on the obtained transfer request (S44). For example, when the remaining amount of new light source 21 is P1, and the remaining amount of old light source 21 is P2, manager 65 subtracts the remaining amount associated with the identification information of old light source 21 in the emission allowance management information from P2 to 0, and adds P2 to the remaining amount P1 associated with the identification information of new light source 21 in the emission allowance management information. Accordingly, the remaining amount of the emission quota of old light source 21 is transferred to new light source 21.

In this manner, emission allowance management system 10 can transfer the remaining amount of the emission quota from old light source 21 to new light source 21.

Note that the user may acquire a compensation from a business entity by returning the remaining amount of the emission quota of old light source 21 that is no longer used to the business entity that manufactures and sells light source 21. That is, the user
may sell the remaining amount of the emission quota to a business entity. The user may acquire the money corresponding to the remaining amount of the emission quota from a business entity, or when purchasing new light source 21, the amount of money corresponding to the remaining amount of the emission quota of old light source 21 may be discounted from the price of new light source 21. Similar to the above-described transfer operation, although the returning of the remaining amount of the emission quota of old light source 21 is realized by, for example, causing information terminal 70 to execute the browser or the predetermined application program, the returning may be realized by returning (recycling) actual old light source 21 to a business entity.

Since a business entity that manufactures and sells light source 21 performs business activities within the range of the emission quota allocated to the business entity, the business entity can expand the business activities by buying the emission quotas from users.

### [Modification 1]

The emission allowance management information described in the above-described embodiment may be visualized in a display device (not illustrated) connected to server device 60. Information processing unit 62 can visualize the emission allowance management information by outputting image information for displaying the emission allowance management information on the display device.

Additionally, information processing unit 62 can calculate how much carbon dioxide has been emitted by (a large number of) sold light sources 21 by aggregating the original emission quota and the remaining amount of the emission quota based on the emission allowance management information. When visualizing the emission allowance management information, information processing unit 62 can visualize how much carbon dioxide has been emitted by (a large number of) sold light sources 21 by outputting the image information including the calculation result to the display device.

Additionally, information processing unit 62 can also generate the above-described calculation result as a report (electronic file). Such a report is useful when a business entity that performs manufacturing and sales of light source 21 reports the status of the emission amount of carbon dioxide to a country and the like.

### [Modification 2]

In the above-described embodiment, the remaining amount of the emission quota represented by the amount of power used (column (b) of FIG. 2) in the emission allowance management information in FIG. 2 is provided in advance. That is, the emission amount of carbon dioxide corresponding to the emission quota has been converted in advance to the amount of power used.

Here, although a predetermined calculation formula is used when converting the emission amount of carbon dioxide to the amount of power used, this calculation formula is different depending on the area to which facility 100 belongs. This is because the relationship between the amount of power used and the emission amount of carbon dioxide is different for each area, since an electric power company that supplies electric power is different for each area, and the breakdown of the employed electric power generation systems (thermal power generation or nuclear power generation) is different depending on the electric power company.

Therefore, manager 65 of server device 60 may convert the emission amount of carbon dioxide to the amount of power used in consideration of the area to which facility 100 belongs. For example, in Operation Example 1, when the first registration information is stored in storage 63, area information indicating the area to which facility 100 belongs is transmitted from information terminal 70 to server device 60 based on an operation by the user. Alternatively, the area information is set to electric power measuring device 50 at the time of installation of electric power measuring device 50 to facility 100, and electric power measuring device 50 transmits the area information in addition to the power usage information to server device 60, when transmitting the power usage information for the first time.

Obtainer 64 obtains the area information together with the power usage information, and manager 65 selects a calculation formula according to the obtained area information, and converts the emission amount of carbon dioxide to the amount of power used by using the selected calculation formula.

In this case, the remaining amount of the emission quota represented by the amount of power used (column (b) of FIG. 2) is not included in the emission allowance management information from the beginning, but is added to the emission allowance management information at the time when the first registration information is stored in storage 63, or at the time when server device 60 receives the power usage information for the first time. Accordingly, emission allowance management system 10 can more correctly manage the emission amount of carbon dioxide in consideration of the area to which facility 100 belongs.

Additionally, in Operation Example 2, at the time of installation of illumination controller 30 to facility 100, or at the time when the second registration information is stored in storage 34, the area information is set to illumination controller 30, and first communicator 31 of illumination controller 30 transmits, to server device 60, the area information in addition to the power usage information when transmitting the power usage information for the first time. Obtainer 64 obtains the area information together with the power usage information, and manager 65 selects the calculation formula according to the obtained area information, and converts the emission amount of carbon dioxide to the amount of power used by using the selected calculation formula.

In this case, the remaining amount of the emission quota represented by the amount of power used (column (b) of FIG. 2) is added to the emission allowance management information at the time when server device 60 receives the power usage information for the first time. Accordingly, emission allowance management system 10 can more correctly manage the emission amount of carbon dioxide in consideration of the area to which facility 100 belongs.

### [Modification 3]

In the above-described embodiment, manager 65 manages the emission amount of carbon dioxide by subtracting the amount of power used indicated by the power usage information obtained by obtainer 64 from the remaining amount of the emission quota represented by the amount of power used (column (b) of FIG. 2). However, manager 65 may convert the amount of power used indicated by the power usage information to the emission amount of carbon dioxide, and subtracts the emission amount of carbon dioxide from the remaining amount of the emission quota represented by the emission amount (column (a) of FIG. 2).

Here, although the predetermined calculation formula is used when converting the amount of power used to the emission amount of carbon dioxide, this calculation formula is different depending on the area to which facility 100 belongs, for the reason described in Modification 2. Therefore, also when converting the amount of power used to the emission amount of carbon dioxide, similar to Modification 2, obtainer 64 may obtain the area information indicating the area to which facility 100 belongs, together with the power usage information, and manager 65 may select the calculation formula according to the obtained area information.

### [Effects and the like]

As explained above, emission allowance management system 10 includes: storage 63 that stores emission allowance management information indicating, for each of a plurality of light sources 21 for illumination, a relationship between (i) identification information of the light source 21 and (ii) a remaining amount of a carbon dioxide emission quota allocated to the light source 21; obtainer 64 that obtains power usage information, the power usage information including an amount of power used by target light source 21 included in the plurality of light sources 21, and including specification information for specifying identification information of target light source 21; and manager 65 that reduces the remaining amount associated with the identification information of target light source 21 in the emission allowance management information, based on the power usage information obtained by obtainer 64. The carbon dioxide is an example of greenhouse gas.

Emission allowance management system 10 as described above can manage the emission amount of carbon dioxide resulting from the use of light sources 21 for illumination.

It is possible that obtainer 64 further obtains a transfer request for transferring a remaining amount of a carbon dioxide emission quota between first light source and a second light source which are included in the plurality of light sources 21, and that manager 65 adds a remaining amount associated with identification information of the first light source in the emission allowance management information to a remaining amount associated with identification information of the second light source in the emission allowance management information, based on the transfer request obtained.

Emission allowance management system 10 as described above transfer the remaining amount of the emission quota.

Emission allowance management system 10 further includes first controller 66 that makes target light source 21 unusable, when the remaining amount associated with the identification information of target light source 21 in the emission allowance management information is used up.

Emission allowance management system 10 as described above can suppress an increase in the emission amount of carbon dioxide by controlling light source 21 whose remaining amount of the emission quota is used up to be unusable.

Emission allowance management system 10 further includes second controller 36 that causes light source 21 in vicinity of target light source 21 among the plurality of light sources 21 to increase a brightness, based on arrangement information indicating an arrangement of the plurality of light sources 21, when target light source 21 is made unusable.

Emission allowance management system 10 as described above can supplement the illuminance that is decreased by controlling target light source 21 to be unusable, by causing the other light sources 21 to brightly emit light.

For example, it is possible that the emission allowance management information further includes group identification information items indicating groups to which the plurality of light sources 21 belong, and that first controller 66 makes one or more light sources 21 belonging to a same group unusable among the plurality of light sources 21, based on a total of remaining amounts of carbon dioxide emission quotas allocated to the one or more light sources 21.

Emission allowance management system 10 as described above can manage the remaining amount of the emission quota on a group basis.

For example, it is possible that one or more light sources 21 belonging to the same group are assigned priorities, and that first controller 66 makes the one or more light sources 21 unusable in an order based on the priorities, when the total becomes close to zero.

Emission allowance management system 10 as described above can control light sources 21 belonging to the same group to be unusable, based on the predetermined priorities.

For example, it is possible that an emission allowance management method performed by a computer configured to access a storage device (storage 63) that stores emission allowance management information, the emission allowance management information indicating, for each of a plurality of light sources 21 for illumination, a relationship between (i) identification information of the light source 21 and (ii) a remaining amount of a carbon dioxide emission quota allocated to the light source 21, the emission allowance management method comprising: obtaining power usage information, the power usage information including an amount of power used by target light source 21 included in the plurality of light sources 21, and including specification information for specifying identification information of target light source 21; and reducing the remaining amount associated with the identification information of target light source 21 in the emission allowance management information, based on the power usage information obtained in the obtaining.

The emission allowance management method as described above can manage the emission amount of carbon dioxide resulting from the use of light sources 21 for illumination.

### (OTHER EMBODIMENTS)

Although the embodiment has been described above, the present invention is not limited to the embodiment.

For example, in the above-described embodiment, although the emission amount of greenhouse gases resulting from the use of light sources is managed, the emission amount of greenhouse gases resulting from the use of electric instruments other than the light sources may be managed. That is, the emission allowance management system may manage the emission amount (emission quota) allocated to the electric instruments other than the light sources.

Additionally, although the emission allowance management system is realized by a plurality of devices in the above-described embodiment, the emission allowance management system may be realized as a single device. For example, the emission allowance management system may be realized as a single device corresponding to a server device. When the emission allowance management system is realized by a plurality of devices, the components included in the emission allowance management system may be distributed to a plurality of devices in any manner. For example, a part or all of the processing that has been described to be performed by one of the illumination controller and the server device in the above-described embodiment may be performed by the other of the illumination controller and the server device.

Additionally, the communication method between the devices in the above-described embodiment is not particularly limited. For example, in the above-described embodiment, although the electric power measuring device transmits the measured value of the amount of power used to the server device through the wide area communication network, the electric power measuring device may transmit the measured value to the illumination controller through a local communication network. In this case, the measured value of the amount of power used is transmitted to the server device through the wide area communication network by the illumination controller. Additionally, a relay device (for example, a wireless router or the like), which is not illustrated, may intervene in the communication between the devices.

For example, it is possible in the above-described embodiment that the process performed by a certain processing unit may be performed by another processing unit, that an order of a plurality of processes is changed, or that a plurality of processes are performed in parallel.

Each constituent element included in the above embodiments may be realized by executing a software program suitable for the constituent element. Each of the constituent elements may be realized by means of a program executing unit, such as a Central Processing Unit (CPU) or a processor, reading and executing the software program recorded on a recording medium such as a hard disk or semiconductor memory.

The constituent elements may be implemented to hardware. For example, the constituent elements may be implemented to circuits (or integrated circuits). These circuits may form a single circuit, or serve as separate circuits. Each circuit may be may be a general-purpose circuit or a dedicated circuit.

It should be noted that general or specific aspects of the present invention may be implemented to a system, a device, a method, an integrated circuit, or a computer program. The general or specific aspects of the present invention may be implemented to a non-transitory computer-readable recording medium such as an optical disk, a Hard Disk Drive (HDD), or a semiconductor memory, on which the computer program is recorded.

For example, the present invention may be implemented to an illumination controller or a server device. The present invention may be implemented to an emission allowance management method executed by a computer such as an emission allowance management system. The present invention may be implemented to a program (in other words, computer program product) for causing a computer to execute the emission allowance management method. The present invention may be a non-transitory computer-readable recording medium on which such a program is recorded.

In addition, the present invention may include embodiments obtained by making various modifications on the above embodiment which those skilled in the art will arrive at, or embodiments obtained by selectively combining the constituent elements and functions disclosed in the above embodiment, without materially departing from the scope of the present invention.

### [Reference Signs List]

10 emission allowance management system
21 light source
36 second controller
63 storage
64 obtainer
65 manager
66 first controller

## Claims

1. An emission allowance management system (10) comprising:
a storage that stores emission allowance management information indicating, for each of a plurality of light sources (21) for illumination, a relationship between (i) identification information of the light source (21) and (ii) a remaining amount of a greenhouse gas emission quota allocated to the light source (21);
an obtainer (64) that obtains power usage information, the power usage information including an amount of power used by a target light source included in the plurality of light sources (21), and including specification information for specifying identification information of the target light source;
a manager (65) that reduces the remaining amount associated with the identification information of the target light source in the emission allowance management information, based on the power usage information obtained by the obtainer (64);
a first controller (66) that makes the target light source unusable, when the remaining amount associated with the identification information of the target light source in the emission allowance management information is used up; and
a second controller (36) that causes a light source (21) in vicinity of the target light source among the plurality of light sources (21) to increase a brightness, based on arrangement information indicating an arrangement of the plurality of light sources (21), when the target light source is made unusable.

2. The emission allowance management system (10) according to claim 1,
wherein the obtainer (64) further obtains a transfer request for transferring a remaining amount of a greenhouse gas emission quota between a first light source and a second light source which are included in the plurality of light sources (21), and
the manager (65) adds a remaining amount associated with identification information of the first light source in the emission allowance management information to a remaining amount associated with identification information of the second light source in the emission allowance management information, based on the transfer request obtained.

3. An emission allowance management method performed by a computer configured to access a storage device that stores emission allowance management information, the emission allowance management information indicating, for each of a plurality of light sources (21) for illumination, a relationship between (i) identification information of the light source (21) and (ii) a remaining amount of a greenhouse gas emission quota allocated to the light source (21), the emission allowance management method comprising:
obtaining power usage information, the power usage information including an amount of power used by a target light source included in the plurality of light sources (21), and including specification information for specifying identification information of the target light source;
reducing the remaining amount associated with the identification information of the target light source in the emission allowance management information, based on the power usage information obtained in the obtaining;
making the target light source unusable, when the remaining amount associated with the identification information of the target light source in the emission allowance management information is used up; and
causing a light source (21) in vicinity of the target light source among the plurality of light sources (21) to increase a brightness, based on arrangement information indicating an arrangement of the plurality of light sources (21), when the target light source is made unusable.

4. A program for causing a computer to perform the emission allowance management method according to claim 3.

## Patentansprüche

1. Emissionsberechtigungsverwaltungssystem (10), umfassend:
einen Speicher, der Emissionsberechtigungsverwaltungsinformationen speichert, die für jede einer Mehrzahl von Lichtquellen (21) zur Beleuchtung eine Beziehung zwischen (i) Identifikationsinformationen der Lichtquelle (21) und (ii) einer Restmenge einer Treibhausgasemissionsquote angeben, die der Lichtquelle (21) zugewiesen ist;
ein Erfasser (64), der Stromverbrauchsinformationen erfasst, wobei die Stromverbrauchsinformationen eine Strommenge, die von einer Ziellichtquelle verbraucht wird, die in der Mehrzahl von Lichtquellen (21) enthalten ist, aufweisen und Spezifikationsinformationen zum Festlegen von Identifikationsinformationen der Ziellichtquelle aufweisen;
einen Verwalter (65), der auf der Grundlage der Stromverbrauchsinformationen, die von dem Erfasser (64) erfasst sind, die Restmenge reduziert, die den Identifikationsinformationen der Ziellichtquelle in den Emissionsberechtigungsverwaltungsinformationen zugeordnet ist;
eine erste Steuereinheit (66), die die Ziellichtquelle unbenutzbar macht, wenn die Restmenge, die den Identifikationsinformationen der Ziellichtquelle in den Emissionsberechtigungsverwaltungsinformationen zugeordnet ist, aufgebraucht ist; und
eine zweite Steuereinheit (36), die auf der Grundlage von Anordnungsinformationen, die eine Anordnung der Mehrzahl von Lichtquellen (21) angeben, veranlasst, dass eine Lichtquelle (21) in der Nähe der Ziellichtquelle aus der Mehrzahl von Lichtquellen (21) eine Helligkeit erhöht, wenn die Ziellichtquelle unbenutzbar gemacht ist.

2. Emissionsberechtigungsverwaltungssystem (10) nach Anspruch 1,
wobei der Erfasser (64) ferner eine Übertragungsanforderung zum Übertragen einer Restmenge einer Treibhausgasemissionsquote zwischen einer ersten Lichtquelle und einer zweiten Lichtquelle, die in der Mehrzahl von Lichtquellen (21) enthalten sind, erfasst und
der Verwalter (65) auf der Grundlage der erfassten Übertragungsanforderung eine Restmenge, die Identifikationsinformationen der ersten Lichtquelle in den Emissionsberechtigungsverwaltungsinformationen zugeordnet ist, zu einer Restmenge addiert, die Identifikationsinformationen der zweiten Lichtquelle in den Emissionsberechtigungsverwaltungsinformationen zugeordnet ist.

3. Emissionsberechtigungsverwaltungsverfahren, das von einem Computer durchgeführt wird, der dafür ausgelegt ist, um auf eine Speichervorrichtung zuzugreifen, die Emissionsberechtigungsverwaltungsinformationen speichert, wobei die Emissionsberechtigungsverwaltungsinformationen für jede einer Mehrzahl von Lichtquellen (21) zur Beleuchtung eine Beziehung zwischen (i) Identifikationsinformationen der Lichtquelle (21) und (ii) einer Restmenge einer Treibhausgasemissionsquote angeben, die der Lichtquelle (21) zugewiesen ist, wobei das Emissionsberechtigungsverwaltungsverfahren umfasst:
Erfassen von Stromverbrauchsinformationen, wobei die Stromverbrauchsinformationen eine Strommenge, die von einer Ziellichtquelle verbraucht wird, die in der Mehrzahl von Lichtquellen (21) enthalten ist, aufweisen und Spezifikationsinformationen zum Festlegen von Identifikationsinformationen der Ziellichtquelle aufweisen;
Reduzieren der Restmenge, die den Identifikationsinformationen der Ziellichtquelle in den Emissionsberechtigungsverwaltungsinformationen zugeordnet ist, auf der Grundlage der Stromverbrauchsinformationen, die bei dem Erfassen erfasst werden;
Unbenutzbarmachen der Ziellichtquelle, wenn die Restmenge, die den Identifikationsinformationen der Ziellichtquelle in den Emissionsberechtigungsverwaltungsinformationen zugeordnet ist, aufgebraucht ist; und
Veranlassen, dass eine Lichtquelle (21) in der Nähe der Ziellichtquelle aus der Mehrzahl von Lichtquellen (21) ihre Helligkeit auf der Grundlage von Anordnungsinformationen, die eine Anordnung der Mehrzahl von Lichtquellen (21) angeben, erhöht, wenn die Ziellichtquelle unbenutzbar gemacht ist.

4. Programm, das einen Computer veranlasst, das Emissionsberechtigungsverwaltungsverfahren nach Anspruch 3 auszuführen.

## Revendications

1. Système de gestion de quotas d'émission (10) comprenant :
une mémoire qui stocke une information de gestion de quotas d'émission indiquant, pour chacune d'une pluralité de sources lumineuses (21) pour l'éclairage, une relation entre (i) une information d'identification de la source lumineuse (21) et (ii) une quantité restante d'un quota d'émission de gaz à effet de serre attribué à la source lumineuse (21) ;
un module d'obtention (64) qui obtient une information d'utilisation d'énergie, ladite information d'utilisation d'énergie comprenant une quantité d'énergie utilisée par une source lumineuse cible incluse dans la pluralité de sources lumineuses (21), et comprenant une information de spécification permettant de spécifier une information d'identification de la source lumineuse cible
un gestionnaire (65) qui réduit la quantité restante associée à l'information d'identification de la source lumineuse cible dans l'information de gestion de quotas d'émission, sur la base de l'information d'utilisation d'énergie obtenue par le module d'obtention (64) ;
un premier contrôleur (66) qui rend la source lumineuse cible inutilisable, lorsque la quantité restante associée à l'information d'identification de la source lumineuse cible dans l'information de gestion de quotas d'émission est épuisée ; et
un second contrôleur (36) qui amène une source lumineuse (21) à proximité de la source lumineuse cible parmi la pluralité de sources lumineuses (21) à augmenter une luminosité, sur la base d'une information d'agencement indiquant un agencement de la pluralité de sources lumineuses (21), lorsque la source lumineuse cible est rendue inutilisable.

2. Système de gestion de quotas d'émission (10) selon la revendication 1,
dans lequel le module d'obtention (64) obtient en outre une demande de transfert pour transférer une quantité restante d'un quota d'émission de gaz à effet de serre entre une première source lumineuse et une seconde source lumineuse qui sont incluses dans la pluralité de sources lumineuses (21), et
dans lequel le gestionnaire (65) ajoute une quantité restante associée à l'information d'identification de la première source lumineuse dans l'information de gestion de quotas d'émission à une quantité restante associée à l'information d'identification de la seconde source lumineuse dans l'information de gestion de quotas d'émission, sur la base de la demande de transfert obtenue.

3. Procédé de gestion de quotas d'émission mis en œuvre par un ordinateur configuré pour accéder à un dispositif de stockage qui stocke une information de gestion de quotas d'émission, ladite information de gestion de quotas d'émission indiquant, pour chacune d'une pluralité de sources lumineuses (21) pour l'éclairage, une relation entre (i) une information d'identification de la source lumineuse (21) et (ii) une quantité restante d'un quota d'émission de gaz à effet de serre attribué à la source lumineuse (21), ledit procédé de gestion de quotas d'émission comprenant :
l'obtention d'une information d'utilisation d'énergie, ladite information d'utilisation d'énergie comprenant une quantité d'énergie utilisée par une source lumineuse cible incluse dans la pluralité de sources lumineuses (21), et comprenant une information de spécification permettant de spécifier une information d'identification de la source lumineuse cible ;
la réduction de la quantité restante associée à l'information d'identification de la source lumineuse cible dans l'information de gestion de quotas d'émission, sur la base de l'information d'utilisation d'énergie obtenue lors de l'obtention ;
le fait de rendre la source lumineuse cible inutilisable, lorsque la quantité restante associée à l'information d'identification de la source lumineuse cible dans l'information de gestion de quotas d'émission est épuisée ; et
le fait d'amener une source lumineuse (21) à proximité de la source lumineuse cible parmi la pluralité de sources lumineuses (21) à augmenter une luminosité, sur la base d'une information d'agencement indiquant un agencement de la pluralité de sources lumineuses (21), lorsque la source lumineuse cible est rendue inutilisable.

4. Programme destiné à amener un ordinateur à exécuter le procédé de gestion de quotas d'émission selon la revendication 3.
